# EUROPEAN PATENT APPLICATION

(11) **EP 4 799 846 A1**
(43) Date of publication of application: **02.09.2026**
(21) Application number: 26157373.7
(22) Date of filing: 09.02.2026
(51) Int. Cl.: B60K 35/22, B60K 35/80, B60K 35/81, B60K 35/90

(54) **A CONTROL SYSTEM FOR CONTROLLING A FIXED DISPLAY SYSTEM OF A VEHICLE**

(30) Priority: 26.02.2025 GB 202502809
(71) Applicant: Jaguar Land Rover Limited, Coventry, Warwickshire CV3 4LF (GB)
(72) Inventor: Lad, Hitesh, Coventry, CV3 4LF (GB)
(74) Representative: Jaguar Land Rover Patents Department

(57) **Abstract**

Aspects of the present invention relate to a control system for controlling a fixed display system of a vehicle 1, the control system comprising one or more processors 110 collectively configured to:
selectively operate a vehicle display 32 of the fixed display system according to either a first brightness setting or a second brightness setting, the first brightness setting being configured to cause the display 32 to operate at a first display brightness level and the second brightness setting being configured to cause the display to operate at a second brightness level, the second brightness level comprising a lower value of display brightness than the first display brightness level;
receive temperature data 130 representing a temperature associated with the display 32;
determine if the temperature data 130 is representative of a temperature greater than an upper threshold temperature; and
on determining that the temperature data is representative of a temperature greater than the upper threshold temperature, operate the vehicle display 32 according to the second brightness setting.

## Description

### TECHNICAL FIELD

The present disclosure relates to a control system for controlling a fixed display system of a vehicle, a fixed display system of a vehicle comprising the control system, and a vehicle comprising the fixed display system.

### BACKGROUND

It is known to provide fixed vehicle displays within a vehicle cabin. Fixed vehicle displays are displays that are built into the cabin architecture. Such displays provide information to occupants of the vehicle and sometimes referred to as 'infotainment' displays, reflecting their dual purpose of displaying vehicle operating and entertainment information, such as ventilation and audio controls.

One of the challenges associated with fixed vehicle displays is ensuring that reflections and environment lighting doesn't detract from information being displayed. Another challenge is managing the thermal load on the vehicle display, particularly during startup following long periods of the vehicle being parked in direct sunlight.

It is an aim of the present invention to address one or more of the disadvantages associated with the prior art.

### SUMMARY OF THE INVENTION

Aspects and embodiments of the invention provide a control system for controlling a fixed display system of a vehicle, a fixed display system of a vehicle comprising the control system, and a vehicle comprising the fixed display system as claimed in the appended claims.

According to an aspect of the present invention there is provided a control system for controlling a fixed display system of a vehicle, the control system comprising one or more processors collectively configured to:
selectively operate a vehicle display of the fixed display system according to either a first brightness setting or a second brightness setting, the first brightness setting being configured to cause the display to operate at a first display brightness level and the second brightness setting being configured to cause the display to operate at a second brightness level, the second brightness level comprising a lower value of display brightness than the first display brightness level;
receive temperature data representing a temperature associated with the display;
determine if the temperature data is representative of a temperature greater than an upper threshold temperature; and
on determining that the temperature data is representative of a temperature greater than the upper threshold temperature, operate the vehicle display according to the second brightness setting.

By operating the vehicle display according to a second brightness setting in response to receiving temperature data representing a temperature associated with the display being greater than an upper threshold temperature, the vehicle display is caused to operate at a reduced display brightness level. This reduces the thermal energy output by the display and accordingly prevents the display from significantly exceeding the upper threshold temperature. In turn the display is enabled to continue displaying information without damage and without having to shut off completely due to excessive heat.

Optionally, the one or more processors are further configured to:
receive vehicle operating data representative of a vehicle operating state, the vehicle operating state comprising a vehicle off state, an initialisation cycle state and a vehicle on state, the initialisation cycle state representing a transition between the vehicle off state in which the fixed vehicle display is off and the vehicle on state;
determine the vehicle operating state from the vehicle operating data;
in both the initialisation cycle state and the vehicle on state, determine if the temperature data is representative of a temperature greater than an upper threshold temperature; and
on determining that the temperature data is representative of a temperature greater than the upper threshold temperature, operate the vehicle display according to the second brightness setting, wherein, in the initialisation cycle state, operating the vehicle display according to the second brightness setting comprises switching the display on at the second brightness level.

By determining that temperature data is representative of a temperature greater than the upper threshold temperature prior to the vehicle on state, the control system is enabled to operate the display according to the second brightness setting on startup (i.e. after the vehicle has been in the rest state and during the ignition cycle state). This means that, should the vehicle have been parked in conditions causing excessive heat build-up in the cabin and the temperature associated with the display thereby exceeds the upper threshold temperature, the display is protected by being operated at the reduced brightness level.

Optionally, the temperature data comprises a vehicle cabin temperature and the upper threshold temperature comprises a first threshold temperature associated with the vehicle cabin temperature, wherein the first threshold temperature is greater than or equal to 50°C; and, wherein determining that the temperature data is representative of a temperature greater than the upper threshold temperature comprises determining that the temperature of the vehicle cabin is greater than first threshold temperature.

By including a first threshold temperature of the upper threshold temperature being a vehicle cabin temperature greater than or equal to 50°C, the fixed vehicle display is protected from excessive cabin heat. This means that if the vehicle has been parked in direct sunlight or in a hot climate, the control system responds to protect the display even before any other temperature associated with the display exceeds the upper threshold temperature.

In an embodiment of the invention, the temperature data comprises a temperature of the one or more processors and the upper threshold temperature comprises a second threshold temperature associated with the temperature of the one or more processors, wherein the second threshold temperature is greater than or equal to 85°C; and, wherein determining that the temperature data is representative of a temperature greater than the upper threshold temperature comprises determining that the temperature of the one or more processors is greater than second threshold temperature.

By including a second threshold temperature of the upper threshold temperature being a temperature of the one or more processors greater than 85°C, the one or more processors are protected from overheating. This means that if the solar energy incident on the display causes heating of the one or more processor associated with the display, the control system responds to protect the display before any damage is done to the one or more processors or before the display is caused to switch off.

In an embodiment of the invention the temperature data comprises a temperature of the display and the upper threshold temperature comprises a third threshold temperature associated with the temperature of the display, wherein the third threshold temperature is greater than or equal to 80°C; and, wherein determining that the temperature data is representative of a temperature greater than the upper threshold temperature comprises determining that the temperature of the display is greater than third threshold temperature.

By including a third threshold temperature of the upper threshold temperature being a temperature of the display greater than 80°C, the display is protected from overheating. This means that if the solar energy incident on the display causes heating of the display, the control system responds to protect the display before any damage is done to the display or before the display is caused to switch off.

In an embodiment of the invention, the one or more processors are collectively further configured to:
in response to operating the vehicle display according to the second brightness setting, determine if the temperature data is representative of a temperature less than a lower threshold temperature; and
on determining that the temperature data is representative of a temperature less than the lower threshold temperature, operate the vehicle display according to the first brightness setting.

By switching operation of the vehicle display from the second brightness setting to the first brightness setting only after determining that a temperature associated with the display is less than a lower threshold temperature, the display is not caused to flicker between the first and second brightness settings. Rather, the temperature associated with the display must first stabilise to the lower threshold temperature before the vehicle display is operated at the first brightness setting.

Optionally, the one or more processors are collectively further configured to:
on determining that the temperature data is representative of a temperature less than the lower threshold temperature, output a delay condition configured to maintain operation of the vehicle display according to the second brightness setting for a predetermined delay period;
and operate the vehicle display according to the first brightness setting at expiry of the predetermined delay period.

By outputting a delay condition prior to switching from the second brightness setting to the first brightness setting, the display is not caused to flicker between the first and second brightness settings. Rather, the temperature associated with the display must first stabilise to the lower threshold temperature before the vehicle display is operated at the first brightness setting.

Optionally, the predetermined delay period comprises a period of not more than 5 minutes and, optionally, between 2 minutes and 5 minutes.

Optionally, the one or more processors are collectively further configured to determine if the temperature data is representative of a temperature that is less than the lower threshold temperature immediately at the end of the delay period and, if the temperature data is not less than the lower threshold temperature, output a second delay condition configured to maintain operation of the vehicle display according to the second brightness setting for a second predetermined delay period.

By reassessing whether the temperature associated with the display is less than the lower threshold temperature at the end of the first delay condition, the control system ensures that the temperature associated with the display has stabilised before operating the display according the first brightness setting.

In an embodiment of the invention, the one or more processors are collectively further configured to, when switching between operating the display according to the first brightness setting and the second brightness setting, gradually adjust a display brightness level.

By operating gradually adjusting the display brightness level, the display is caused to progressively dim or brighten as the display switches to the second or first brightness setting, respectively. This progressive change in the brightness setting prevents a sudden increase or decrease in brightness that might inadvertently and inconveniently catch a user's attention when they are not looking at the display.

Optionally, wherein the transient brightness setting lasts not less than 8 seconds.

In an embodiment of the invention, the first brightness level comprises at least a first brightness sub-level and a second brightness sub-level, wherein the second brightness sub-level comprises a greater value of display brightness than the first brightness sub-level; and
wherein operating the vehicle display according to the first brightness setting comprises:
causing the vehicle display to operate at the first brightness sub-level;
receiving light sensor data representing an ambient light level associated with the vehicle display; and
on determining that light sensor data is representative of an ambient light level greater than a threshold light level, causing the vehicle display to operate at the second brightness sub-level.

By operating the display according to a second brightness sub-level, the display may remain visible even in brighter ambient conditions, while the thermal energy output by the display is kept during lower ambient light conditions is reduced by operating the display according to the first brightness sub-level.

According to another aspect of the invention, there is provided a fixed display system of a vehicle comprising the control system.

According to another aspect of the invention, there is provided a vehicle comprising the fixed display system.

According to another aspect of the invention, there is provided a computer implemented method for controlling a fixed display system of a vehicle, the method comprising:
selectively operating a vehicle display of the fixed display system according to either a first brightness setting or a second brightness setting, the first brightness setting being configured to cause the display to operate at a first display brightness level and the second brightness setting being configured to cause the display to operate at a second brightness level, the second brightness level comprising a lower value of display brightness than the first display brightness level;
receiving temperature data representing a temperature associated with the display;
receiving vehicle operating data representative of a vehicle operating state, the vehicle operating state comprising a vehicle off state, an initialisation cycle state and a vehicle on state, the initialisation cycle state representing a transition between the vehicle off state in which the fixed vehicle display is off and the vehicle on state;
determining the vehicle operating state from the vehicle operating data;
in both the initialisation cycle state and the vehicle on state, determining if the temperature data is representative of a temperature greater than an upper threshold temperature; and
on determining that the temperature data is representative of a temperature greater than the upper threshold temperature, operating the vehicle display according to the second brightness setting, wherein, in the initialisation cycle state, operating the vehicle display according to the second brightness setting comprises switching the display on at the second brightness level.

Optionally, the temperature data comprises a vehicle cabin temperature and the upper threshold temperature comprises a first threshold temperature associated with the vehicle cabin temperature, wherein the first threshold temperature is greater than or equal to 50°C; and, wherein determining that the temperature data is representative of a temperature greater than the upper threshold temperature comprises determining that the temperature of the vehicle cabin is greater than first threshold temperature.

In an embodiment of the invention, the temperature data comprises a temperature of the one or more processors and the upper threshold temperature comprises a second threshold temperature associated with the temperature of the one or more processors, wherein the second threshold temperature is greater than or equal to 85°C; and, wherein determining that the temperature data is representative of a temperature greater than the upper threshold temperature comprises determining that the temperature of the one or more processors is greater than second threshold temperature.

In an embodiment of the invention the temperature data comprises a temperature of the display and the upper threshold temperature comprises a third threshold temperature associated with the temperature of the display, wherein the third threshold temperature is greater than or equal to 80°C; and, wherein determining that the temperature data is representative of a temperature greater than the upper threshold temperature comprises determining that the temperature of the display is greater than third threshold temperature.

In an embodiment of the invention, the method further comprises:
in response to operating the vehicle display according to the second brightness setting, determining if the temperature data is representative of a temperature less than a lower threshold temperature; and
on determining that the temperature data is representative of a temperature less than the lower threshold temperature, operating the vehicle display according to the first brightness setting.

Optionally, the method further comprises:
on determining that the temperature data is representative of a temperature less than the lower threshold temperature, outputting a delay condition configured to maintain operation of the vehicle display according to the second brightness setting for a predetermined delay period;
and operating the vehicle display according to the first brightness setting at expiry of the predetermined delay period.

Optionally, the predetermined delay period comprises a period of not more than 5 minutes and, optionally, between 2 minutes and 5 minutes.

Optionally, the method further comprises determining if the temperature data is representative of a temperature that is less than the lower threshold temperature immediately at the end of the delay period and, if the temperature data is not less than the lower threshold temperature, outputting a second delay condition configured to maintain operation of the vehicle display according to the second brightness setting for a second predetermined delay period.

In an embodiment of the invention, the method further comprises operating the display according to a transient brightness setting when switching between operating the display according to the first brightness setting and the second brightness setting, wherein the transient brightness setting causes the display to gradually adjust the display brightness level to match the first display brightness level or the second display brightness level that is being switched to.

Optionally, wherein the transient brightness setting lasts not less than 8 seconds.

In an embodiment of the invention, the first brightness level comprises at least a first brightness sub-level and a second brightness sub-level, wherein the first brightness sub-level comprises a greater value of display brightness than the second brightness sub-level; and
wherein operating the vehicle display according to the first brightness setting comprises:
causing the vehicle display to operate at the first brightness sub-level;
receiving light sensor data representing an ambient light level associated with the vehicle display; and
on determining that light sensor data is representative of an ambient light level greater than a threshold light level, causing the vehicle display to operate at the second brightness sub-level.

According to another aspect of the invention, there is provided computer readable instructions which, when executed by one or more processors, cause the one or more processors to perform the method.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a schematic representation of a vehicle;
Figure 2 shows a schematic view of a cabin of the vehicle;
Figure 3 shows a schematic representation of a control system; and
Figure 4 is a flow chart showing method steps of a control system of the vehicle display.

### DETAILED DESCRIPTION

The present invention relates to a control system for controlling a fixed display system of a vehicle, a fixed display system of a vehicle comprising the control system, and a vehicle comprising the fixed display system.

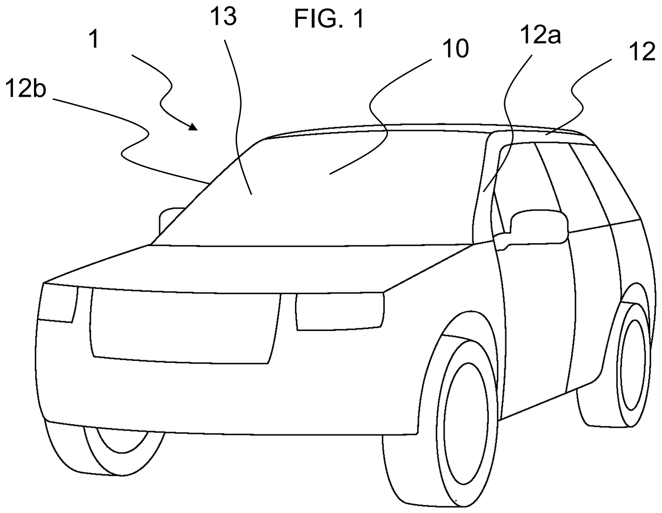

Figure 1 shows a vehicle 1 in accordance with an embodiment of the invention. The vehicle 1 comprises a vehicle cabin 10 in which vehicle occupants may sit.

The vehicle cabin 10 is defined by one or more vehicle structures 12 which may be coupled together, for example using welding and/or riveting. The vehicle structures 12 may comprises pillars 12a, 12b, which may be termed A-pillars, between which a windscreen 13 of the vehicle is located.

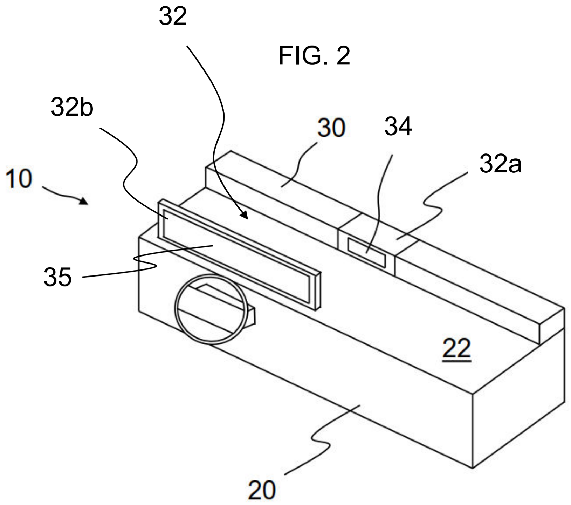

Figure 2 shows a schematic view of a portion of the vehicle cabin 10. The vehicle cabin 10 comprises a fixed display system 32 and an instrument panel structure 20 that extends across the width of the vehicle cabin 10, between the A-pillars (not shown here for clarity). The instrument panel structure 20 is positioned at a forward location of the vehicle cabin 10, forward here defined as being towards the front of the vehicle 1 The instrument panel structure 20 is forward of occupant seating of the vehicle. The instrument panel structure 20 defines a support structure for housing and/or supporting components within the vehicle cabin 10, including the fixed display system 32. Other examples of these components may include operator controls, a steering wheel and one or more storage compartments.

The vehicle cabin 10 further comprises a trim panel 30 located on top of the instrument panel structure 20. The trim panel 30 extends both from an upper surface 22 of the instrument panel structure 20 and at least partially across the width of the vehicle cabin 10. The trim panel 30 may be provided at a forward edge or location of the instrument panel structure 20, and as such may extend from the upper surface 22 of the instrument panel structure 20 towards a windscreen 13 of the vehicle 1. The trim panel 30 comprises a first vehicle display 32a of the fixed display system 32, in this case a rear-view display unit 32a. The rear-view display unit 32a is therefore provided adjacent the upper surface 22 of the instrument panel structure 20 and/or towards the bottom of the windscreen 13 as viewed from a vehicle operator within the vehicle cabin 10.

The rear-view display unit 32a comprises a rear-view display screen 34 configured to display an image of an area to the rear of the vehicle 1. The vehicle 1 may therefore comprise a camera arranged to capture an image of the area behind the vehicle 1. The camera (not shown) may be positioned anywhere about the vehicle 1 where it is able to capture the view that is required to be shown on the display screen 34. The rear-view display screen 34 may be configured to display a live stream of the image captured by the camera 40 such that a vehicle operator can always see an image of the area behind the vehicle 1 during use. As such, the rear-view display unit 30 may replace a traditional rear-view mirror often provided in vehicle cabins.

The fixed display system 32 may further comprise a second vehicle display 32b, in this case a main display unit 32b extending upward from the upper surface 22 of the instrument panel structure 20. The main display unit 32b comprises a display screen 35 configured to display any number of vehicle parameters, such as for example vehicle speed, vehicle temperature, vehicle mode, navigational information and/or infotainment. The main display unit 32b may be the primary non-steering or speed modulating interface between a vehicle operator and the vehicle 1.

Embodiments of the invention described herein relate to a control system 100 for controlling the fixed display system 32, including one or more of the vehicle displays 32a, 32b, of the vehicle cabin 10. The control system 100 and any associated computer implemented method may be used to control each of the vehicle displays 32a, 32b in the same way. It will also be appreciated that the term 'fixed display system 32' may be used interchangeably with the abbreviated term 'display 32' which encompasses both vehicle displays 32a, 32b. Therefore, the following disclosure can be applied equally to either display 32a, or 32b.

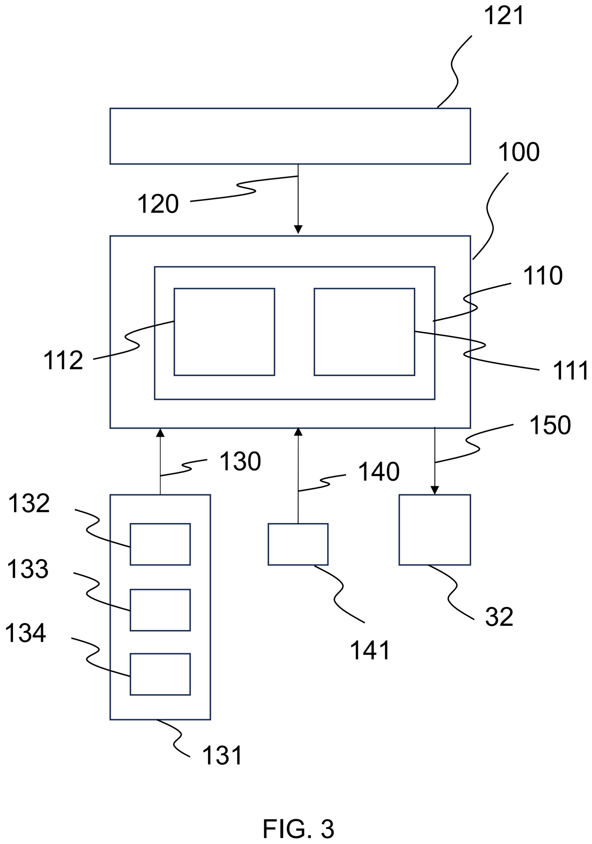

With reference to Figure 3, there is schematically illustrated a control system 100 for a vehicle. The control system 100 comprises one or more processors 110 (herein collectively referred to as a controller 110).

As shown in Figure 3, the control system 100 is configured to receive inputs including vehicle operating data 120, temperature data 130 and light sensor data 140. In at least partial dependence on any of these data 120, 130, 140, the control system 100 is further configured to output an operational command to the vehicle display 32a to operate the display screen 34 in accordance with either a first brightness setting or second brightness setting, as will be explained further below.

The vehicle operating data 120 represents a vehicle operating state. The vehicle operating state is one of a vehicle off state, an initialisation cycle state and a vehicle on state. The vehicle off state is a state in which the display screens of the fixed display system 32 are switched off. The vehicle off state may include states in which the vehicle 1 is unoccupied and locked, such as when the vehicle 1 is left parked up. The vehicle on state is a state in which the display screens of the fixed display system 32 are switched on and may include states in which a vehicle occupant can interact with the fixed display system 32. The initialisation cycle state is a state in which vehicle systems transition between the vehicle off state and the vehicle on state and includes the turning on of any of the display screens of the fixed display system 32. The vehicle operating data is generated by a vehicle operating system 121. The vehicle operating system 121 may be any vehicle control system associated with power management of the vehicle 1.

The temperature data 130 represents a temperature associated with the display 32 and is generated by one or more temperature sensors 132, 133, 134 associated with the display 32. By temperature associated with the display 32, it is meant a temperature of any component of the fixed display system 32 or an ambient temperature surrounding any component of the fixed display system 32. In the illustrated embodiment, a temperature sensing module 131 comprises three temperature sensors 132, 133, 134 that are each configured to output different temperature data associated with their respective aspects of the display 32. A first temperature sensor 132 outputs a cabin temperature, a second temperature sensor 133 outputs a temperature of the one more processors 110 and a third temperature sensor 134 outputs a temperature of the display 32, in particular, a temperature of the display screen 34. While the three temperature sensors 132, 133, 134 are shown as part of a single temperature module 131, it will be appreciated that this is for schematic purposes only and that each of the temperature sensors 132, 133, 134 may be located wherever needed to provide good temperature data, including having their own separate channels and/or inputs to the controller 110.

The light sensor data 140 is generated by a light intensity sensor 141 and represents the intensity of ambient light that is incident on the sensor 141. The sensor 141 is preferably positioned so that the intensity of light incident on the sensor 141 is the same as the intensity of light incident on the display screen 34. However, it will be appreciated, that all that is important is that the sensor 141 provides an indication of the intensity of light incident on the display screen 34 and can be configured to provide any ambient light data that rises and falls in good correlation with the light incident on the display screen 34.

The control system 100 as illustrated in Figure 3 comprises one controller 110, although it will be appreciated that this is merely illustrative. The controller 110 comprises processing means 111 and memory means 112. The processing means 111 may be one or more electronic processing device which operably executes computer-readable instructions. The memory means 112 may be one or more memory device. The memory means 112 is electrically coupled to the processing means 111. The memory means 112 is configured to store instructions, and the processing means 111 is configured to access the memory means 112 and execute the instructions stored thereon.

In embodiments of the invention, the controller 110 of the control system 100 is configured to selectively operate the vehicle display 32 according to either the first brightness setting or the second brightness setting.

The first brightness setting is configured to cause the display 32 to operate at a first display brightness level and the second brightness setting is configured to cause the display to operate at a second brightness level. The second brightness level comprises a lower value of display brightness than the first display brightness level. This means that when the vehicle display 32 is caused to operate at the first brightness setting, the display screens 34, 35, output a greater amount of luminance than when operated in at the second brightness setting. The luminance may be measured using conventional units such as 'nits' (candela per square metre).

The controller 110 is further configured to: receive the temperature data 130 representing a temperature associated with the display 32; then determine if the temperature data 130 is representative of a temperature greater than an upper threshold temperature; and, on determining that the temperature data 130 is representative of a temperature greater than the upper threshold temperature, operate the vehicle display 32 according to the second brightness setting. Operating the vehicle display 32 according to the second brightness setting can comprise dimming the vehicle display from the first brightness setting to the second brightness setting.

By operating the vehicle display 32 according to a second brightness setting in response to receiving temperature data representing a temperature associated with the display being greater than an upper threshold temperature, the vehicle display 32 is caused to operate at a reduced display brightness level. This reduces the thermal energy output by the display 32 and, accordingly, prevents the display 32 from significantly exceeding the upper threshold temperature. In turn the display is enabled to continue displaying information without damage and without having to shut off completely due to excessive heat.

Additionally, the controller 110 may be configured to protect the display 32 when it is powered on during the vehicle initialisation cycle. To do this, the controller receives the vehicle operating data 120 representative of the vehicle operating state; then determines the vehicle operating state from the vehicle operating data 120. In both the initialisation cycle state and the vehicle on state, the controller 110 further determines if the temperature data is representative of a temperature greater than the upper threshold temperature. On determining that the temperature data is representative of a temperature greater than the upper threshold temperature, the controller 110 operates the vehicle display according to the second brightness setting. In the case in which the controller 110 has determined that the vehicle operating state is the initialisation cycle state, the controller 110 switches the display 32 on at the second brightness level. Therefore, by determining that temperature data is representative of a temperature greater than the upper threshold temperature prior to the vehicle on state, the control system is enabled to operate the display according to the second brightness setting on startup (i.e. after the vehicle 1 has been in the rest state and during the ignition cycle state). This means that, should the vehicle 1 have been parked in conditions causing excessive heat build-up in the cabin and the temperature associated with the display thereby exceeds the upper threshold temperature, the display is protected by being operated at the reduced brightness level.

The temperature data comprises data from each of the temperature sensors 132, 133, 134. The controller 110 makes the upper threshold temperature dependent on the temperature sensor. Accordingly, in the present embodiment, the upper threshold temperature comprises three threshold temperatures.

A first threshold temperature is associated with the first temperature sensor 132 and is greater than or equal to about 50°C. Therefore, if the controller 110 determines that the temperature data from the first temperature sensor 132 is representative of a temperature greater than 50°C, the controller 110 operates the display 32 in accordance with the second brightness setting. Such a condition is most likely to occur on vehicle start up - i.e. during the initialisation cycle. This is because such cabin temperatures are typically only seen after the vehicle has been parked in direct sunlight for a significant period. Therefore, by including a first threshold temperature of the upper threshold temperature being a vehicle cabin temperature greater than or equal to 50°C, the display 32 is protected from excessive cabin heat. This means that if the vehicle has been parked in direct sunlight or in a hot climate, the controller 110 responds to protect the display even before any other temperature associated with the display exceeds the upper threshold temperature.

A second threshold temperature is associated with second temperature sensor 133 and is greater than or equal to about 85°C. Therefore, if the controller 110 determines that the temperature data from the second temperature sensor 133 is representative of a temperature greater than 85°C, the controller 110 operates the display 32 in accordance with the second brightness setting. Therefore, by including a second threshold temperature of the upper threshold temperature being a temperature of the one or more processors 110 (i.e. the controller itself) greater than 85°C, the one or more processors are protected from overheating. This means that if the solar energy incident on the display 32 causes heating of the one or more processors associated with the display 32, the control system responds to protect the display before any damage is done to the one or more processors or before the display 32 is caused to switch off.

A third threshold temperature is associated with the third temperature sensor 134 and is greater than or equal to about 80°C. Therefore, if the controller 110 determines that the temperature data from the third temperature sensor 134 is representative of a temperature greater than 80°C, the controller 110 operates the display 32 in accordance with the second brightness setting. Therefore, by including a third threshold temperature of the upper threshold temperature being a temperature of the display greater than 80°C, the display 32 is protected from overheating - in particular, the display screen. This means that if the solar energy incident on the display 32 causes heating of the display screen, the control system responds to protect the display 32 before any damage is done to the display 32 or before the display 32 is caused to switch off.

It will be appreciated that controller 110 is configured to operate the display 32 in the second brightness setting if any of the first, second or third threshold temperatures are exceeded. The second brightness setting may include a dimmed state (i,e. the display 34 remains on but at a lower level of brightness than the first brightness setting), or the second brightness setting may include a display off state. By 'about' 50°C, 80°C or 85°C it is meant within a measurable tolerance. In an embodiment, the tolerance may be a tolerance of -0°C, +5°C.

To prevent the display 32 flickering between the first and second brightness levels, the controller is further configured to only switch between operating the display 32 in accordance with the second brightness level and the first brightness level in response receiving temperature data that is representative of a temperature lower than a lower threshold temperature. The lower threshold temperature is lower than the upper threshold temperature. Therefore, in an embodiment of the invention, when the controller 110 vehicle display according to the second brightness setting, the controller 110 is further configured to determine if the temperature data is representative of a temperature less than a lower threshold temperature; and, on determining that the temperature data is representative of a temperature less than the lower threshold temperature, operate the vehicle display 32 according to the first brightness setting.

By switching operation of the vehicle display from the second brightness setting to the first brightness setting only after determining that a temperature associated with the display 32 is less than a lower threshold temperature, the display is not caused to flicker between the first and second brightness settings. Rather, the temperature associated with the display 32 must first stabilise to the lower threshold temperature before the vehicle display 32 is operated at the first brightness setting.

It will be appreciated that the lower threshold temperature may comprise a lower threshold temperature specific to each of the first, second and third temperature sensors 132, 133, 134. In other words, the lower threshold temperature may comprise a first lower threshold temperature associated with the first temperature sensor 132, a second lower threshold temperature associated with the second temperature sensor 133 and a third lower threshold temperature associated with the third temperature sensor 134.

The controller 110 may be further configured to determine that the temperature data is representative of a temperature less than the lower threshold temperature and output a delay condition configured to maintain operation of the vehicle display 32 according to the second brightness setting for a predetermined delay period. The controller 110 then operates the vehicle display according to the first brightness setting at expiry of the predetermined delay period.

By outputting a delay condition prior to switching from the second brightness setting to the first brightness setting, flicker between the first and second brightness settings is even further minimised. Instead, the temperature associated with the display must first stabilise to the lower threshold temperature before the vehicle display 32 is operated at the first brightness setting. Optionally, the predetermined delay period comprises a period of not more than 5 minutes and, optionally, between 2 minutes and 5 minutes.

Optionally, the controller 110 is further configured to determine if the temperature data is representative of a temperature that is less than the lower threshold temperature immediately at the end of the delay period and, if the temperature data is not less than the lower threshold temperature, output a second delay condition configured to maintain operation of the vehicle display 32 according to the second brightness setting for a second predetermined delay period. By reassessing whether the temperature associated with the display 32 is less than the lower threshold temperature at the end of the first delay condition, the control system ensures that the temperature associated with the display 32 has stabilised before operating the display according the first brightness setting.

The controller 110 may be further configured to gradually adjust a display brightness level when switching between operating the display according to the first brightness setting and the second brightness setting. By gradually adjusting the display brightness level, the display 32 is caused to progressively dim or brighten as the display 32 switches to the second or first brightness setting, respectively. This progressive change in the brightness setting prevents a sudden increase or decrease in brightness that might inadvertently and inconveniently catch a user's attention when they are not looking at the display. Optionally, this gradual change in the brightness between the first and second brightness settings lasts no less than 8 seconds.

In embodiments, the controller 110 is further configured to adjust the display 32 brightness in dependence on the intensity of light incident on the display 32. In other words, the controller 110 is configured to adjust the display brightness in dependence on the light sensor data 140 received from the light intensity sensor 141. In such an embodiment, the first brightness level comprises at least a first brightness sub-level and a second brightness sub-level, wherein the second brightness sub-level comprises a greater value of display brightness than the first brightness sub-level. Therefore, when the controller 110 operates the vehicle display 32 according to the first brightness setting, it can further to switch between the first and second brightness sub levels to adjust the display brightness for the intensity of ambient light incident on the display 32. When the ambient light level increases, the controller 110 causes the display 32 to increase its brightness level accordingly. The first and second brightness sub-levels are used to illustrate the controller logic, but it will be appreciated that their may be any number of brightness sub-levels as required to finely adjust the display brightness in response to ever changing ambient light conditions. The difference in brightness intensity level between the brightness sub-levels may be small and the change between them gradual so that an operator of the vehicle is not caused to notice sudden changes in display brightness. As an example, the controller 110 logic operates as follows: the vehicle display 32 is caused to operate at the first brightness sub-level while the controller receives the light sensor data 140. On determining that light sensor data 140 is representative of an ambient light level greater than a threshold light level, the controller 110 causing the vehicle display 32 to operate at the second brightness sub-level. By operating the display according to a second brightness sub-level, the display 32 may remain visible even in brighter ambient conditions, while the thermal energy output by the display 32 during lower ambient light conditions is reduced by operating the display 32 according to the first brightness sub-level.

It will be appreciated that while two brightness levels are exemplified above, additional brightness levels may be used. For example, the controller 110 may be further configured to cause the display 32 to operate according to any one of a number of brightness levels greater than two. The additional brightness levels may be used to gradually adjust the brightness of the display 32. For example, the controller 110 may be configured to adjust the display brightness to the second brightness level in response temperature data representative of a temperature greater than the upper threshold temperature and, if the controller 110 does not receive temperature data representative of a temperature below the lower threshold temperature within a predetermined time - or receives temperature data indicating a further increase in the temperature associated with the display within the predetermined time - may be configured to adjust the display brightness to a third brightness level less than the second brightness level. The third brightness level may be any brightness level less than the second brightness level, including a zero value of display brightness (i.e. the display screen 34 being switched off).

In an embodiment, the controller 110 is configured to operate the display 32 according to the second brightness setting if the temperature data 130 is representative of a temperature greater than 50°C and less than 85°C, and to operate the display 32 according to the third brightness setting if the temperature data 130 is representative of a temperature greater than 85°C, wherein the third brightness setting comprises a zero value of display brightness (the display 34 is switched off).

It will be appreciated that controller 110 logic in response to the light sensor data 140 is overridden by the controller logic in response to the temperature data 130. This means that if the controller 110 determines at any time that the temperature associated with the display is greater than the upper threshold temperature, the controller 110 will operate the display 32 according to the second brightness setting irrespective of the light level incident on the display. In this way, the display 32 is always protected.

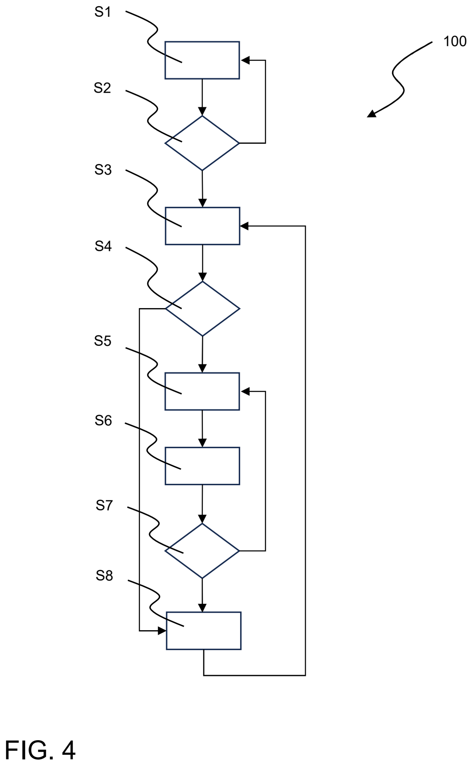

Figure 4 shows a flow chart showing the steps of an example computer implemented method for controlling the fixed display system 32 of the vehicle 1. The method comprises:
- S1: receiving the vehicle operating data 120 representative of the vehicle operating state;
- S2: determining from the vehicle operating data 120 if the ignition cycle has been initiated and, if the ignition cycle has been initiated, proceeding to S3, otherwise returning to S1;
- S3: receiving the temperature data 130;
- S4: determining if the temperature data 130 is representative of a temperature greater than the upper threshold temperature and, if the temperature data 130 is representative of a temperature greater than the upper threshold temperature, proceeding to S5, otherwise proceeding to S8;
- S5: operate the display 32 according to the second brightness setting (if in the vehicle state is the ignition cycle state, this further comprises turning on the display 32 in the second brightness setting);
- S6: receiving the temperature data 130;
- S7: determining if the temperature data 130 is representative of a temperature less than the lower threshold temperature and, if the temperature data 130 is representative of a temperature less than the lower threshold temperature, proceeding to S8, otherwise returning to S5;
- S8: operate the display 32 according to the first brightness setting (if in the vehicle state is the ignition cycle state, this further comprises turning on the display 32 in the first brightness setting).

Optionally, the method further comprises:
on determining that the temperature data is representative of a temperature less than the lower threshold temperature, outputting a delay condition configured to maintain operation of the vehicle display 32 according to the second brightness setting for a predetermined delay period;
and operating the vehicle display 32 according to the first brightness setting at expiry of the predetermined delay period.

Optionally, the predetermined delay period comprises a period of not more than 5 minutes and, optionally, between 2 minutes and 5 minutes.

Optionally, the method further comprises determining if the temperature data is representative of a temperature that is less than the lower threshold temperature immediately at the end of the delay period and, if the temperature data is not less than the lower threshold temperature, outputting a second delay condition configured to maintain operation of the vehicle display 32 according to the second brightness setting for a second predetermined delay period.

In an embodiment of the invention, the method further comprises operating the display 32 according to a transient brightness setting when switching between operating the display 32 according to the first brightness setting and the second brightness setting, wherein the transient brightness setting causes the display 32 to gradually adjust the display brightness level to match the first display brightness level or the second display brightness level that is being switched to.

Optionally, wherein the transient brightness setting lasts no less than 8 seconds.

In an embodiment of the invention, the first brightness level comprises at least a first brightness sub-level and a second brightness sub-level, wherein the first brightness sub-level comprises a greater value of display brightness than the second brightness sub-level; and
wherein operating the vehicle display 32 according to the first brightness setting comprises:
causing the vehicle display to operate at the first brightness sub-level;
receiving light sensor data representing an ambient light level associated with the vehicle display; and
on determining that light sensor data is representative of an ambient light level greater than a threshold light level, causing the vehicle display to operate at the second brightness sub-level.

According to another aspect of the invention, there is provided computer readable instructions which, when executed by one or more processors, cause the one or more processors to perform the method.

It will be appreciated that various changes and modifications can be made to the present invention without departing from the scope of the present application.

## Claims

1. A control system for controlling a fixed display system of a vehicle, the control system comprising one or more processors collectively configured to:
selectively operate a vehicle display of the fixed display system according to either a first brightness setting or a second brightness setting, the first brightness setting being configured to cause the display to operate at a first display brightness level and the second brightness setting being configured to cause the display to operate at a second brightness level, the second brightness level comprising a lower value of display brightness than the first display brightness level;
receive temperature data representing a temperature associated with the display;
receive vehicle operating data representative of a vehicle operating state, the vehicle operating state comprising a vehicle off state, an initialisation cycle state and a vehicle on state, the initialisation cycle state representing a transition between the vehicle off state in which the vehicle display is off and the vehicle on state;
determine the vehicle operating state from the vehicle operating data;
in both the initialisation cycle state and the vehicle on state, determine if the temperature data is representative of a temperature greater than an upper threshold temperature; and
on determining that the temperature data is representative of a temperature greater than the upper threshold temperature, operate the vehicle display according to the second brightness setting, wherein, in the initialisation cycle state, operating the vehicle display according to the second brightness setting comprises switching the vehicle display on at the second brightness level.

2. The control system of claim 1, wherein the temperature data comprises a vehicle cabin temperature and the upper threshold temperature comprises a first threshold temperature associated with the vehicle cabin temperature, wherein the first threshold temperature is greater than or equal to 50°C; and, wherein determining that the temperature data is representative of a temperature greater than the upper threshold temperature comprises determining that the temperature of the vehicle cabin is greater than first threshold temperature.

3. The control system of any preceding claim, wherein the temperature data comprises a temperature of the one or more processors and the upper threshold temperature comprises a second threshold temperature associated with the temperature of the one or more processors, wherein the second threshold temperature is greater than or equal to 85°C; and, wherein determining that the temperature data is representative of a temperature greater than the upper threshold temperature comprises determining that the temperature of the one or more processors is greater than second threshold temperature.

4. The control system of any preceding claim, wherein the temperature data comprises a temperature of the display and the upper threshold temperature comprises a third threshold temperature associated with the temperature of the display, wherein the third threshold temperature is greater than or equal to 80°C; and, wherein determining that the temperature data is representative of a temperature greater than the upper threshold temperature comprises determining that the temperature of the display is greater than third threshold temperature.

5. The control system any preceding claim, wherein the one or more processors are collectively further configured to:
in response to operating the vehicle display according to the second brightness setting, determine if the temperature data is representative of a temperature less than a lower threshold temperature; and
on determining that the temperature data is representative of a temperature less than the lower threshold temperature, operate the vehicle display according to the first brightness setting.

6. The control system of claim 5, wherein the one or more processors are collectively further configured to:
on determining that the temperature data is representative of a temperature less than the lower threshold temperature, output a delay condition configured to maintain operation of the vehicle display according to the second brightness setting for a predetermined delay period;
and operate the vehicle display according to the first brightness setting at expiry of the predetermined delay period.

7. The control system of claim 6, wherein the predetermined delay period comprises a period of not more than 5 minutes and, optionally, between 2 minutes and 5 minutes.

8. The control system of claim 6 or claim 7, wherein the one or more processors are collectively further configured to determine if the temperature data is representative of a temperature that is less than the lower threshold temperature immediately at the end of the delay period and, if the temperature data is not less than the lower threshold temperature, output a second delay condition configured to maintain operation of the vehicle display according to the second brightness setting for a second predetermined delay period.

9. The control system of any preceding claim, wherein the one or more processors are collectively further configured to, when switching between operating the display according to the first brightness setting and the second brightness setting, gradually adjust a display brightness level.

10. The control system of any preceding claim, wherein the first brightness level comprises at least a first brightness sub-level and a second brightness sub-level, wherein the second brightness sub-level comprises a greater value of display brightness than the first brightness sub-level; and
wherein operating the vehicle display according to the first brightness setting comprises:
causing the vehicle display to operate at the first brightness sub-level;
receiving light sensor data representing an ambient light level associated with the vehicle display; and
on determining that light sensor data is representative of an ambient light level greater than a threshold light level, causing the vehicle display to operate at the second brightness sub-level.

11. A fixed display system of a vehicle comprising the control system of any of claims 1 to 10.

12. A vehicle comprising the fixed display system of claim 11.

13. A computer implemented method for controlling a fixed display system of a vehicle, the method comprising:
selectively operating a vehicle display of the fixed display system according to either a first brightness setting or a second brightness setting, the first brightness setting being configured to cause the display to operate at a first display brightness level and the second brightness setting being configured to cause the display to operate at a second brightness level, the second brightness level comprising a lower value of display brightness than the first display brightness level;
receiving temperature data representing a temperature associated with the display;
receiving vehicle operating data representative of a vehicle operating state, the vehicle operating state comprising a vehicle off state, an initialisation cycle state and a vehicle on state, the initialisation cycle state representing a transition between the vehicle off state in which the fixed vehicle display is off and the vehicle on state;
determining the vehicle operating state from the vehicle operating data;
in both the initialisation cycle state and the vehicle on state, determining if the temperature data is representative of a temperature greater than an upper threshold temperature; and
on determining that the temperature data is representative of a temperature greater than the upper threshold temperature, operating the vehicle display according to the second brightness setting, wherein, in the initialisation cycle state, operating the vehicle display according to the second brightness setting comprises switching the display on at the second brightness level.

14. Computer readable instructions which, when executed by one or more processors, cause the one or more processors to perform the method according to claim 13.
